# EUROPÄISCHE PATENTSCHRIFT

(11) **EP 3 378 603 B1**
(45) Veröffentlichungstag und Bekanntmachung des Hinweises auf die Patenterteilung: **31.03.2021**
(21) Anmeldenummer: 17001156.3
(22) Anmeldetag: 06.07.2017
(51) Int. Cl.: B25H 1/04, B23P 21/00, B65G 1/137

(54) **VORRICHTUNG ZUR FEHLERFREIEN ANORDNUNG EINES BESTÜCKUNGSBEHÄLTERS**
DEVICE FOR ERROR-FREE ARRANGEMENT OF A FEEDING CONTAINER
DISPOSITIF D'AGENCEMENT SANS ERREUR D'UN RÉCIPIENT DE PLACEMENT

(30) Priorität: 21.03.2017 DE 202017001497 U
(43) Veröffentlichungstag der Anmeldung: 26.09.2018
(73) Patentinhaber: Rudolph Logistik Gruppe GmbH & Co. KG, 34225 Baunatal (DE)
(72) Erfinder: Frühauf, Feliks, 04509 Krostitz (DE); Engel, Heiko, 04357 Leipzig (DE)
(74) Vertreter: Sperling, Thomas

(56) Entgegenhaltungen:
- EP-A1- 2 957 973
- DE-A1-102013 220 107
- JP-A- 2015 089 586
- US-A1- 2014 083 058
- US-A1- 2014 217 044

## Beschreibung

Die Erfindung betrifft eine Vorrichtung, mit der ein Bestückungsbehälter zur Bestückung mit Bestückungsgut fehlerfrei angeordnet werden kann. Durch die Möglichkeit zur fehlerfreien Anordnung des Bestückungsbehälters können Bestückungsfehler vermieden und der Arbeitsablauf effektiver gestaltet werden.

Bei der Fertigung von Maschinen, wie beispielsweise Fahrzeugen, kann es erforderlich sein, dass Bauteile oder Baugruppen nach einer vorgegebenen Reihenfolge bereitgestellt und montiert werden müssen. Dabei kann es vorgesehen sein, dass zu montierende Bauteile oder Baugruppen in einem Bestückungsbehälter, der auch als Sequenzbehälter bezeichnet werden kann, nach einer vorgegebenen Montagereihenfolge (Montagesequenz) vorsortiert werden, um einen effektiven Arbeitsablauf zur gewährleisten. Zweckmäßigerweise müssen die Bestückungsbehälter entsprechend der vorgegebenen Montagesequenz mit Bauteilen oder Baugruppen so bestückt werden, dass bei der Entnahme der Bauteile oder Baugruppen bei der Montage kurze Wege gewährleistet werden können, ohne dass zusätzliche logistische Schritte, wie beispielsweise ein Wenden oder Drehen eines Bestückungsbehälters erforderlich sind. Die Bestückung wird daher vorteilhafterweise so organisiert, dass die bestückten Bestückungsbehälter bei der Entnahme des Bestückungsbehälters aus einer Zwischenlagerung stets die vorgegebene Montagereihenfolge aufweisen.

Üblicherweise erfolgt die Bestückung eines Bestückungsbehälters händisch durch einen Bestücker, wobei der Bestückungsbehälter zur Bestückung auf einer Ablagefläche oder einen Ablagetisch, der in Fachkreisen auch als Sequenziertisch bezeichnet wird, platziert wird. Für eine fehlerfreie Bestückung nach einer vorgegebenen Montagereihenfolge ist es erforderlich, dass der Bestückungsbehälter bei der Bestückung richtig angeordnet ist. Es kann jedoch vorkommen, dass ein Bestückungsbehälter falsch angeordnet wird, so dass der Bestückungsbehälter nicht in der für die vorgegebene Montagereihenfolge vorgesehene Weise bestückt wird. Dies hat zur Folge, dass der Bestückungsbehälter nach der Entnahme aus der Zwischenlagerung durch einen zusätzlichen Arbeitsschritt in die richtige Entnahmeposition gedreht oder gewendet werden muss, wodurch ein größerer Zeitaufwand erforderlich ist.

Aus dem Stand der Technik sind vergleichsweise komplexe kamerabasierte stationäre Systeme bekannt, bei welchen eine Fehlererkennung auf der Auswertung von Bilddaten mittels Algorithmen beruht. Ein solches System ist beispielsweise aus US 2014/0083058 A1 bekannt. US 2014/0083058 A1 offenbart ein Lager- und Kommissioniersystem mit einem kamerabasierten Bewegungssensorsystem, welches Bewegungen der Hände oder Unterarme eines Bedieners innerhalb eines Arbeitsbereichs einer Arbeitsstation erfasst und diese in entsprechende Bewegungssignale umwandelt, wobei die Bewegungssignale mit einer Recheneinheit in zeitabhängige Trajektorien umgewandelt werden, welche mit Referenztrajektorien in einem virtuellen Raum, der dem Arbeitsbereichs entspricht, verglichen werden, um Steuersignale zu erzeugen und auszugeben, die dem Bediener eine korrekte oder falsche Ausführung seiner Bewegungen anzeigen. Zur Erfassung von Bewegungen werden Marker eingesetzt, welche an der Kleidung des Bedieners befestigt sind. Diese Marker werden von einer Lichtquelle bestrahlt, wobei das reflektierte Licht von einer stationären Kamera erfasst wird.

Bei einem aus JP 2015 089 586 A bekannten System werden Kameras zur Erfassung von Bewegungen eines Bedieners eingesetzt, wobei die Kameras ortsfest von einer Ablagevorrichtung getrennt angeordnet sind.

Aus DE 10 2013 220 107 A1 ist eine Kommissioniervorrichtung bekannt, bei welcher Bewegungen und Bestückungsfehler eines Bedieners anhand einer rechnerischen Auswertung von Daten eines 3D-Tiefensensors erfasst werden.

Unterstützend kann außerdem eine Kamera eingesetzt werden.

Aus EP 2 957 973 A ist eine weitere Kommissioniervorrichtung bekannt.

Die der vorliegenden Erfindung zugrundeliegende Aufgabe besteht daher darin, eine Vorrichtung zur fehlerfreien Anordnung eines Bestückungsbehälters vorzuschlagen, welche eine einfache und energiesparende Fehlererkennung ermöglicht und mobil einsetzbar ist.

Erfindungsgemäß wird die Aufgabe durch eine Vorrichtung mit den Merkmalen des Anspruchs 1 gelöst. Vorteilhafte Ausgestaltungen und Weiterbildungen der erfindungsgemäßen Vorrichtung können mit in untergeordneten Ansprüchen bezeichneten Merkmalen realisiert werden.

Die erfindungsgemäße Vorrichtung zur fehlerfreien Anordnung eines Bestückungsbehälters weist mindestens eine Ablagefläche, auf der mindestens ein Bestückungsbehälter in eine für eine Bestückung vorgegebene Sollposition positionierbar ist, und eine Kontrolleinrichtung zum Erkennen einer vorgegebenen Sollposition mindestens eines auf der Ablagefläche positionierten Bestückungsbehälters auf, wobei die Kontrolleinrichtung eine Signalwiedergabeeinheit aufweist, mit der beim Erkennen der vorgegebenen Sollposition des mindestens einen Bestückungsbehälters ein für einen Benutzer beziehungsweise Bestücker wahrnehmbares Signal wiedergebbar ist.

Im Sinne der Erfindung kann ein Benutzer der erfindungsgemäßen Vorrichtung als Bestücker bezeichnet werden, wobei es sich um eine Person handelt, die einen Bestückungsbehälter mit Bestückungsgut bestückt.

Der Vorteil der erfindungsgemäßen Vorrichtung besteht darin, dass beim Erkennen einer richtigen Anordnung des Bestückungsbehälters in einer vorgegebenen Sollposition mit einer Signalwiedergabeeinheit ein für den Benutzer beziehungsweise den Bestücker wahrnehmbares Signal wiedergegeben wird, so dass der Bestücker eine Rückmeldung über die richtige Anordnung des Bestückungsbehälters erhält und mit der Bestückung entsprechend einer Bestückungsvorgabeanforderung fortfahren kann. Befindet sich ein auf der Ablagefläche angeordneter Bestückungsbehälter nicht in der vorgebebenen Sollposition beziehungsweise wird die vorgegebene Sollposition von der Kontrolleinrichtung nicht erkannt, wird - gemäß einer vorteilhaften Ausführungsvariante - kein für den Bestücker wahrnehmbares Signal wiedergegeben, so dass der Bestücker veranlasst wird, eine andere Anordnung des Bestückungsbehälters zu wählen, bis ein für den Bestücker wahrnehmbares Signal als positive Rückmeldung ergeht, dass der Bestückungsbehälter nun in der vorgegebenen Sollposition positioniert ist.

Gemäß einer weiteren Ausführungsvariante kann die Kontrolleinrichtung derart eingerichtet sein, dass über die Signalwiedergabeeinheit ein für den Bestücker wahrnehmbares Signal wiedergegeben wird, wenn die vorgegebene Sollposition eines Bestückungsbehälters nicht erkannt ist.

Erfindungsgemäß weist die Kontrolleinrichtung eine mit der Signalwiedergabeeinheit elektrisch gekoppelte Lichtschranke auf, wobei an einem Bestückungsbehälter ein Reflektor zum Reflektieren eines Lichtstrahls derart angeordnet ist, dass ein Lichtstrahl der Lichtschranke bei einer Positionierung des Bestückungsbehälters in der vorgegebenen Sollposition reflektiert wird. Mit anderen Worten, an einem Bestückungsbehälter ist ein Reflektor zum Reflektieren eines Lichtstrahls derart angeordnet, dass der von der Lichtschranke ausgesendete Lichtstrahl nicht unterbrochen wird, wenn der Bestückungsbehälter in der vorgegebenen Sollposition angeordnet ist. Dabei kann die Lichtschranke derart eingerichtet sein, dass eine Unterbrechung der Lichtschranke ein Einschalten der Signalwiedergabeeinrichtung bewirkt, so dass das für den Bestücker wahrnehmbare Signal bei einer Unterbrechung der Lichtschranke wiedergegeben wird. Gemäß einer anderen Ausführungsvariante kann die Lichtschranke derart eingerichtet sein, dass eine Unterbrechung der Lichtschranke ein Ausschalten der Signalwiedergabeeinrichtung bewirkt, so dass das für den Bestücker wahrnehmbare Signal bei einer Unterbrechung der Lichtschranke nicht wiedergegeben wird.

Bei dem für den Bestücker wahrnehmbaren Signal, welches von der Signalwiedergabeeinheit wiedergebbar ist, kann es sich vorzugsweise um ein Lichtsignal handeln. Zweckmäßigerweise kann die Signalwiedergabeeinheit mindestens ein Licht emittierendes Element aufweisen. Vorzugsweise kann die Signalwiedergabeeinheit Licht emittierende Dioden aufweisen. Dabei kann es vorgesehen sein, dass ein mehrere Dioden aufweisendes Array eingesetzt wird. Weiterhin kann es vorgesehen sein, dass alternativ oder zusätzlich ein akustisches Signal und/oder ein Vibrationssignal wiedergebbar ist. Es kann daher vorgesehen sein, dass die Signalwiedergabeeinheit zur Wiedergabe eines Lichtsignals, eines Vibrationssignals und/oder eines akustischen Signals eingerichtet ist.

Vorteilhafterweise kann die Signalwiedergabeeinheit in Form eines Lichtdioden-Arrays derart angeordnet sein, dass die mindestens eine Ablagefläche bei Wiedergabe des Lichtsignals beleuchtet wird. Dabei kann es vorgesehen sein, dass die Signalwiedergabeeinheit an einer Halterung oberhalb der Ablagefläche angeordnet ist, um die Ablagefläche von oben zu beleuchten. Vorteilhafterweise wird die Beleuchtung als wahrnehmbares Signal eingeschaltet, wenn der Bestückungsbehälter in der vorgegebenen Sollposition positioniert ist, wobei der Lichtstrahl der Lichtschranke von dem an dem Bestückungsbehälter angeordneten Reflektor reflektiert und nicht unterbrochen wird. Nach einer weiteren vorteilhaften Ausführungsvariante kann die Ablagefläche durch die Signalwiedergabeeinheit von unten beleuchtet sein, wobei die Ablagefläche und der Boden eines Bestückungsbehälters transparent ausgebildet sein können. Der Vorteil der für den Bestücker wahrnehmbaren Signalwiedergabe in Form einer Beleuchtung der Ablagefläche hat den Vorteil, dass dem Bestücker die richtige Positionierung des Bestückungsbehälters in der Sollposition rückgemeldet wird und dass die Ablagefläche sowie der Bestückungsbehälter ausgeleuchtet werden, so dass auch bei unzureichender Umgebungsbeleuchtung ein ausreichend beleuchteter Arbeitsplatz bereitgestellt werden kann.

Erfindungsgemäß weist die Vorrichtung einen elektrischen Energiespeicher auf, mit dem zumindest die Kontrolleinrichtung mit elektrischer Energie versorgt wird. Bei dem elektrischen Energiespeicher kann es sich um einen Akku handeln, so dass eine externe Energieversorgung der Kontrolleinrichtung und der mit der Kontrollreinrichtung elektrisch verbundenen Signalwiedergabeeinheit nicht erforderlich ist. Dies hat den Vorteil, dass die erfindungsgemäße Vorrichtung mobil einsatzbar ist, ohne dass eine externe Energieversorgung bereitgestellt werden muss.

Zur Überprüfung des Ladungszustandes des Akkus kann eine Anzeigeeinheit vorgesehen sein, so dass der Akku rechtzeitig aufgeladen oder ausgetauscht werden kann.

Weiterhin erfindungsgemäß sind die mindestens eine Ablagefläche, die Kontrolleinrichtung, die Signalwiedergabeeinheit und der elektrische Energiespeicher an einer Rahmenkonstruktion befestigt angeordnet. Gemäß einer vorteilhaften Ausführungsvariante ist die Rahmenkonstruktion derart gebildet, dass die Vorrichtung die Form eines Tisches aufweist, wobei die Tischfläche durch die Ablagefläche gebildet wird. Unterhalb der ersten oberen Ablagefläche können weitere Ablageflächen zur Ablage oder Zwischenlagerung von bereits bestückten oder leeren Bestückungsbehältern vorgesehen sein.

Erfindungsgemäß ist weiter vorgesehen, dass die Rahmenkonstruktion Rollen aufweist, mit der die Rahmenkonstruktion rollend fortbewegbar ist. Dies hat den Vorteil, dass die erfindungsgemäße Vorrichtung mobil eingesetzt werden kann. So ist es möglich, dass der Bestücker die Vorrichtung auf einfache Weise fortbewegen kann, um verschiedene Entnahmestellen für Bestückungsgut zu erreichen.

Anhand der nachfolgenden Figuren soll die Erfindung beispielhaft näher erläutert werden.

Es zeigen:
- Figur 1: eine schematische Darstellung eines Ausführungsbeispiels der erfindungsgemäßen Vorrichtung in einer ersten Perspektivansicht
- Figur 2: eine schematische Darstellung eines Ausführungsbeispiels der erfindungsgemäßen Vorrichtung in einer weiteren Perspektivansicht
- Figur 3: eine schematische Darstellung eines Bestückungsbehälters der erfindungsgemäßen Vorrichtung in einer Perspektivansicht

Wiederkehrende Merkmale sind in den Figuren mit gleichen Bezugszeichen gekennzeichnet.

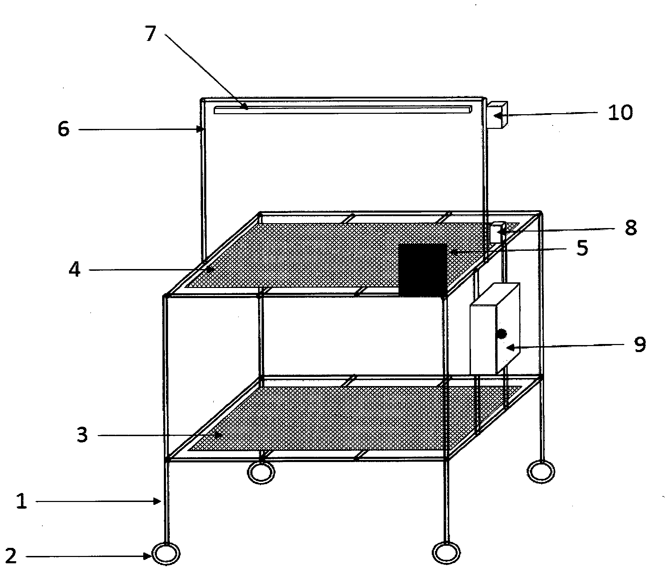

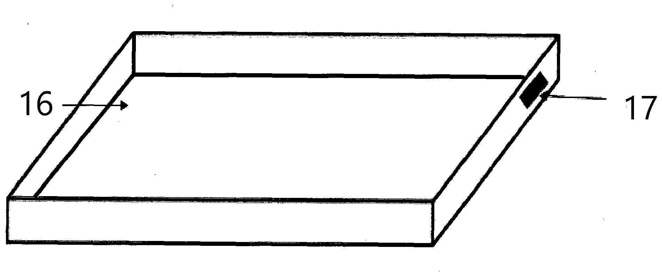

Die Figur 1 zeigt eine schematische Darstellung eines Ausführungsbeispiels der erfindungsgemäßen Vorrichtung in einer ersten Perspektivansicht. Die erfindungsgemäße Vorrichtung zur fehlerfreien Anordnung eines Bestückungsbehälters 16 (siehe Figur 3) weist eine untere Ablagefläche 3 und eine obere Ablagefläche 4 auf, auf der mindestens ein Bestückungsbehälter 16 (nicht gezeigt) in eine für eine Bestückung vorgegebene Sollposition positionierbar ist. Weiterhin weist die erfindungsgemäße Vorrichtung eine Kontrolleinrichtung 8 mit einer Lichtschranke zum Erkennen einer vorgegebenen Sollposition mindestens eines auf der oberen Ablagefläche 4 positionierten Bestückungsbehälters 16 (nicht gezeigt) auf, wobei die Kontrolleinrichtung 8 weiterhin eine Signalwiedergabeeinheit 7 aufweist, mit der beim Erkennen der vorgegebenen Sollposition des mindestens einen Bestückungsbehälters 16 (nicht gezeigt) ein für einen Benutzer beziehungsweise Bestücker wahrnehmbares Signal wiedergebbar ist. Bei der Signalwiedergabeeinheit 7 handelt es sich im gezeigten Ausführungsbeispiel um eine mehrere Licht emittierende Dioden aufweisende Leiste (LED-Leiste), die an einer Bügelhalterung 6 oberhalb der oberen Ablagefläche 4 derart angeordnet ist, dass die obere Auflagefläche 4 bei einer durch die Lichtschranke erkannten Sollposition eines auf der oberen Ablagefläche 4 positionierten Bestückungsbehälters 16 beleuchtet wird.

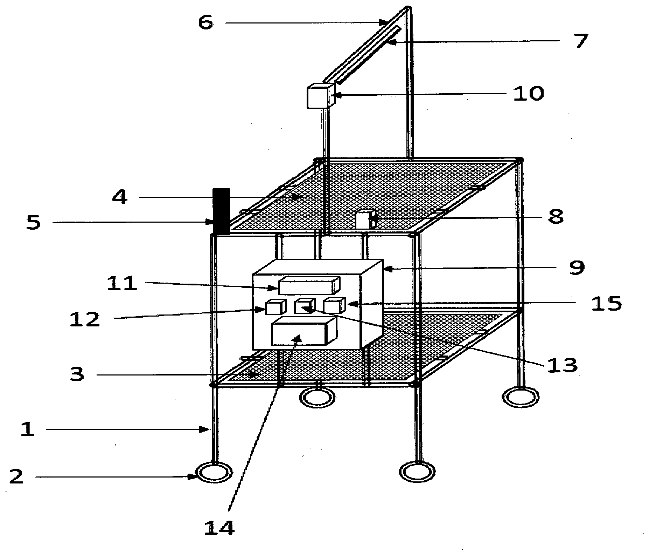

Die erfindungsgemäße Vorrichtung weist weiterhin einen Schaltschrank 9 auf, dessen Bestandteile in Figur 2 näher beschrieben sind. Mit dem Bezugszeichen 10 ist eine Ladeanzeige gekennzeichnet, die den Ladungszustand eines Akkus 14 (nicht gezeigt) anzeigt, der in dem Schaltschrank 9 zur elektrischen Versorgung der Lichtschranke und der LED-Leiste 7 angeordnet sein kann. Das Bezugszeichen 5 kennzeichnet ein Klemmbrett, an dem ein Bestückungsplan befestigt werden kann.

Die erfindungsgemäße Vorrichtung weist im gezeigten Ausführungsbeispiel weiterhin eine Rahmenkonstruktion 1 auf, an der alle Bestandteile der erfindungsgemäßen Vorrichtung befestigt sind. Die Rahmenkonstruktion 1 verleiht der Vorrichtung die Form eines Tisches. An den vier Beinen der Rahmenkonstruktion ist jeweils eine Rolle 2 angebracht, so dass die Vorrichtung rollend fortbewegt werden kann und demzufolge mobil einsetzbar ist.

Die Figur 2 zeigt eine schematische Darstellung eines Ausführungsbeispiels der erfindungsgemäßen Vorrichtung in einer weiteren Perspektivansicht. Im Unterschied zu Figur 1 zeigt die Figur 2 eine um 90° gedrehte Ansicht (Seitenansicht) des in Figur 1 gezeigten Ausführungsbeispiels der erfindungsgemäßen Vorrichtung. Weiter im Unterschied zu Figur 1 sind die Bestandteile des Schaltschranks 9 detailliert dargestellt. Der Schaltschrank 9 umfasst eine Klemmleiste 11, eine Sicherung 12, ein Relais 13, einen Akku 14 und einen Tiefenentladeschutz 15. Im Schaltschrank 9 werden alle elektrischen Leiter und elektrischen Schalter, die zum Betrieb der erfindungsgemäßen Vorrichtung erforderlich sind, zusammengeführt.

Die Figur 3 zeigt eine schematische Darstellung eines Bestückungsbehälters 16 der erfindungsgemäßen Vorrichtung in einer Perspektivansicht. Bei dem Bestückungsbehälter 16 handelt es sich um einen Kasten, der in der gezeigten Ausführungsvariante eine rechteckige Form aufweist, wobei auch eine quadratische Form denkbar ist. Mit dem Bezugszeichen 17 ist ein Reflektor gekennzeichnet, der außenseitig so an dem Bestückungsbehälter 16 angeordnet ist, dass ein Lichtstrahl der Lichtschranke 8.1 bei einer Positionierung des Bestückungsbehälters 16 in der vorgegebenen Sollposition auf der oberen Ablagefläche 4 reflektiert und nicht unterbrochen wird.

Bei einer Positionierung des Bestückungsbehälters 16 gemäß der vorgegebenen Sollposition auf der oberen Ablagefläche 4, wird ein Lichtstrahl der Lichtschranke nicht unterbrochen, wodurch ein Einschalten der LED-Leiste 7 ausgelöst wird, die fortan die obere Ablagefläche 4 und den auf der oberen Ablagefläche 4 positionierten Bestückungsbehälter 16 beleuchtet. Bei einer Entnahme des Bestückungsbehälters 16 oder bei einer fehlerhaften Positionierung wird der Lichtstrahl der Lichtschranke nicht mehr reflektiert oder unterbrochen, wodurch ein Ausschalten der LED-Leiste 7 ausgelöst wird.

**Bezugszeichenliste**

| | |
|---|---|
| 1 | Rahmenkonstruktion |
| 2 | Rollen |
| 3 | Untere Ablagefläche |
| 4 | Obere Ablagefläche |
| 5 | Klemmbrett |
| 6 | Halterung für LED-Leiste |
| 7 | Signalwiedergabeeinheit/LED-Leiste |
| 8 | Kontrolleinrichtung |
| | Lichtschranke |
| 9 | Schaltschrank |
| 10 | Ladeanzeige |
| 11 | Klemmleiste |
| 12 | Elektrische Sicherung |
| 13 | Relais |
| 14 | Akku |
| 15 | Tiefenentladeschutz |
| 16 | Bestückungsbehälter |
| 17 | Reflektor |

## Patentansprüche

1. Vorrichtung zur fehlerfreien Anordnung eines Bestückungsbehälters (16), aufweisend:
mindestens eine Ablagefläche (3;4), auf der mindestens ein Bestückungsbehälter (16) in eine für eine Bestückung vorgegebene Sollposition positionierbar ist, und
eine Kontrolleinrichtung (8) zum Erkennen einer vorgegebenen Sollposition mindestens eines auf der Ablagefläche (3;4) positionierten Bestückungsbehälters (16), wobei die Kontrolleinrichtung (8) eine Signalwiedergabeeinheit (7) aufweist, mit der beim Erkennen der vorgegebenen Sollposition des mindestens einen Bestückungsbehälters (16) ein für einen Benutzer wahrnehmbares Signal wiedergebbar ist,
**dadurch gekennzeichnet, dass** die Kontrolleinrichtung (8) eine mit der Signalwiedergabeeinheit (7) elektrisch gekoppelte Lichtschranke aufweist, wobei an einem Bestückungsbehälter (16) ein Reflektor (17) zum Reflektieren eines Lichtstrahls derart angeordnet ist, dass ein Lichtstrahl der Lichtschranke bei einer Positionierung des Bestückungsbehälters (16) in der vorgegebenen Sollposition reflektiert wird,
wobei eine Unterbrechung der Lichtschranke ein Einschalten oder ein Ausschalten der Signalwiedergabeeinheit (7) bewirkt, und ferner **gekennzeichnet durch** einen elektrischen Energiespeicher (14), mit dem zumindest die Kontrolleinrichtung (8) mit elektrischer Energie versorgt wird, wobei die mindestens eine Ablagefläche (3;4), die Kontrolleinrichtung (8), die Signalwiedergabeeinheit (7) und der elektrische Energiespeicher (14) an einer Rahmenkonstruktion (1) befestigt angeordnet sind und wobei die Rahmenkonstruktion (1) Rollen (2) aufweist, mit der die Rahmenkonstruktion (1) rollend fortbewegbar ist.

2. Vorrichtung nach dem vorhergehenden Anspruch, **dadurch gekennzeichnet, dass**
die Signalwiedergabeeinheit (7) zur Wiedergabe eines Licht-signals, eines Vibrationssignals und/oder eines akustischen Signals eingerichtet ist.

3. Vorrichtung nach einem der Ansprüche 1 oder 2, **dadurch gekennzeichnet, dass** die Signalwiedergabeeinheit (7) Licht emittierende Dioden aufweist.

4. Vorrichtung nach einem der Ansprüche 1 bis 3, **dadurch gekennzeichnet, dass** die Signalwiedergabeeinheit (7) derart angeordnet ist, dass die mindestens eine Ablagefläche (3;4) bei Wiedergabe des Lichtsignals beleuchtet wird.

## Claims

1. A device for the fault-free arrangement of a loading container (16), having:
at least one deposit surface (3; 4) on which at least one loading container (16) can be positioned in a target position specified for loading, and
a control device (8) for recognizing a specified target position of at least one loading container (16) positioned on the deposit surface (3; 4), wherein the control device (8) has a signal reproduction unit (7) with which a signal perceptible to a user can be reproduced when recognizing the specified target position of the at least one loading container (16), **characterized in that** the control device (8) has a light barrier which is electrically coupled with the signal reproduction unit (7),
wherein a reflector (17) for reflecting a light beam is arranged on a loading container (16) in such a way that a light beam of the light barrier is reflected when the loading container (16) is positioned in the specified target position,
wherein a disruption of the light barrier causes the signal reproduction unit (7) to be switched on or switched off, and further **characterized by** an electric energy storage (14) with which at least the control device (8) is supplied with electric energy,
wherein the at least one deposit surface (3; 4), the control device (8), the signal reproduction unit (7) and the electric energy storage (14) are arranged fixed on a frame construction (1) and wherein the frame construction (1) has rollers (2) with which the frame construction (1) can be moved in a rolling manner.

2. The device according to the preceding claim, **characterized in that** the signal reproduction unit (7) is set up to reproduce a light signal, a vibration signal and/or an acoustic signal.

3. The device according to one of claims 1 or 2, **characterized in that** the signal reproduction unit (7) has light emitting diodes.

4. The device according to one of claims 1 to 3, **characterized in that** the signal reproduction unit (7) is arranged such that the at least one deposit surface (3; 4) is illuminated when the light signal is reproduced.

## Revendications

1. Dispositif d'agencement sans erreur d'un récipient de garnissage (16), présentant :
au moins une surface de dépôt (3 ; 4) sur laquelle au moins un récipient de garnissage (16) peut être positionné dans une position de consigne prédéfinie pour un garnissage, et
un dispositif de contrôle (8) pour la reconnaissance d'une position de consigne prédéfinie au moins d'un récipient de garnissage (16) positionné sur la surface de dépôt (3 ; 4), dans lequel le dispositif de contrôle (8) présente un module de restitution de signal (7) avec lequel un signal perceptible pour un utilisateur peut être restitué lors de la reconnaissance de la position de consigne prédéfinie de l'au moins un récipient de garnissage (16), **caractérisé en ce que** le dispositif de contrôle (8) présente une barrière lumineuse couplée électriquement au module de restitution de signal (7), dans lequel un réflecteur (17) pour le réfléchissement d'un rayon lumineux est agencé sur un récipient de garnissage (16) de telle sorte qu'un rayon lumineux de la barrière lumineuse est reflété lors d'un positionnement du récipient de garnissage (16) dans la position de consigne prédéfinie,
dans lequel une interruption de la barrière lumineuse entraîne une mise en marche ou une mise hors circuit du module de restitution de signal (7), et **caractérisé en outre par** un accumulateur d'énergie électrique (14) avec lequel au moins le dispositif de contrôle (8) est alimenté en énergie électrique,
dans lequel l'au moins une surface de dépôt (3 ; 4), le dispositif de contrôle (8), le module de restitution de signal (7) et l'accumulateur d'énergie électrique (14) sont agencés de manière fixée à une construction de cadre (1), et dans lequel la construction de cadre (1) présente des rouleaux (2) avec lesquels la construction de cadre (1) peut être déplacée en roulant.

2. Dispositif selon la revendication précédente, **caractérisé en ce que** le module de restitution de signal (7) est configuré pour la restitution d'un signal lumineux, d'un signal vibratoire et/ou d'un signal sonore.

3. Dispositif selon une des revendications 1 ou 2, **caractérisé en ce que** le module de restitution de signal (7) présente des diodes électroluminescentes.

4. Dispositif selon une des revendications 1 à 3, **caractérisé en ce que** le module de restitution de signal (7) est disposé de telle sorte que l'au moins une surface de dépôt (3 ; 4) est éclairée en cas de restitution du signal lumineux.
